# EUROPEAN PATENT SPECIFICATION

(11) **EP 2 653 363 B1**
(45) Date of publication and mention of the grant of the patent: **20.12.2017**
(21) Application number: 11848690.1
(22) Date of filing: 02.11.2011
(51) Int. Cl.: B60W 20/00, B60K 6/48, B60K 6/547, B60L 11/14, B60W 10/06, B60W 10/08, F02D 29/02

(54) **POWER TRANSMISSION CONTROL DEVICE FOR VEHICLE**
KRAFTÜBERTRAGUNGSSTEUERUNGSVORRICHTUNG FÜR EIN FAHRZEUG
DISPOSITIF DE COMMANDE DE TRANSMISSION DE PUISSANCE POUR VÉHICULE

(30) Priority: 17.12.2010 JP 2010281114
(43) Date of publication of application: 23.10.2013
(73) Proprietor: AISIN AI Co., Ltd., Nishio-shi, Aichi 445-0006 (JP)
(72) Inventor: KOBAYASHI Kazutaka, Nishio-shi Aichi 445-0006 (JP); MIYAZAKI Takeshige, Nishio-shi Aichi 445-0006 (JP); TAKAHASHI Tomoya, Toyota-shi Aichi 471-8571 (JP)
(74) Representative: Ettmayr, Andreas
(86) International application number: PCT/JP2011/075257
(87) International publication number: WO 2012/081325

(56) References cited:
- EP-A1- 1 221 394
- EP-A2- 1 728 672
- DE-A1-102007 055 785
- JP-A- 2006 298 063
- JP-A- 2006 298 064
- JP-A- 2006 298 185
- JP-A- 2009 292 313

## Description

### TECHNICAL FIELD

The present invention relates to a power transmission control apparatus for a vehicle, and more particularly to a power transmission control apparatus which is applied to a vehicle having an internal combustion engine and an electric motor as power sources and which includes a manual transmission and a friction clutch.

### BACKGROUND ART

Conventionally, there has been widely known a so-called hybrid vehicle which includes an engine and a dynamoelectric unit (an electric motor, an electric generator) as power sources (see, for example, Patent Document 1). In such a hybrid vehicle, there can be employed a structure in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

Patent Document 2 discloses a controller for a hybrid four-wheel-drive vehicle. Therein, a controller receives an input signal representing a degree of engagement of a clutch, when the clutch is in a partially engaged stage, and outputs a signal to control a driving force of the motor in accordance with the input signal.

In recent years, there has been developed a power transmission control apparatus which is applied to a hybrid vehicle and which includes a manual transmission and a friction clutch (hereinafter referred to as a "power transmission control apparatus for an HV-MT vehicle"). The term "manual transmission" used herein refers to a transmission which does not include a torque converter and whose gear position is selected in accordance with the shift position of a shift lever operated by a driver (the manual transmission is denoted by MT). Also, the term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by a driver.

### PRIOR ART DOCUMENTS

### PATENT DOCUMENTS

Patent Document 1: Japanese Patent Application Laid-Open (kokai) No. 2000-224710
Patent Document 2: EP 1 728 672 A2

### SUMMARY OF THE INVENTION

In general, in a power transmission control apparatus for an HV-MT vehicle which has been developed up to present, there is employed a structure in which the output shaft of the electric motor is connected to the output shaft of the internal combustion engine. When the vehicle travels, the internal combustion engine operates at all times, and motor drive torque makes up for insufficiency of engine drive torque when necessary. Accordingly, there cannot be realized a state in which the vehicle travels through use of motor drive torque only while maintaining the internal combustion engine in a stop state (a state in which the output shaft of the internal combustion engine stops its rotation) (hereinafter referred to as "EV travel").

In order to enable the power transmission control apparatus for an HV-MT vehicle to realize such EV travel in a state in which the driver does not operate the clutch pedal (that is, the clutch is in an engaged state), it is necessary to rotate the output shaft of the transmission through use of motor drive torque, while maintaining a state in which the input shaft of the transmission does not rotate. For such operation, the output shaft of the electric motor must be connected to the output shaft of the transmission, and the transmission must be maintained in a "state in which no power transmission system (route) is established between the input shaft of the transmission and the output shaft thereof."

For such operation, the gear positions of the manual transmission must include not only a "gear position(s) for ordinary travel in which engine drive torque is utilized and in which a power transmission system is established between the input shaft of the transmission and the output shaft thereof' (hereinafter referred to as the "engine travel gear position") but also a "gear position for EV travel in which no power transmission system is established between the input shaft of the transmission and the output shaft thereof and a power transmission system is established between the output shaft of the electric motor and the output shaft of the transmission" (a gear position different from the neutral position; hereinafter referred to as a "motor travel gear position").

In the following description, such an HV-MT vehicle is assumed to include a power transmission control apparatus in which not only the "engine travel gear position" but also the "motor travel gear position" are employed. In the case of a vehicle in which the motor travel gear position is provided for starting the vehicle through EV travel, there is demand for realizing travel at very low speed, similar to so-called creeping, with the electric motor gear position selected. "Creeping" refers to a state in which a vehicle which includes an automatic transmission using a torque converter travels at a very low speed by making use of a very small torque generated by the torque converter in a state in which an accelerator pedal is not operated.

An object of the present invention is to provide a power transmission control apparatus for an HV-MT vehicle which allows EV travel and can realize travel at very low speed, similar to so-called creeping. According to an aspect of the present invention, this object is achieved by a power transmission control apparatus according to claim 1. Advantageous embodiments can be configured according to any of claims 2-5.

A power transmission control apparatus for a vehicle according to the present invention is applied to a hybrid vehicle which includes an internal combustion engine and an electric motor as power sources. This power transmission control apparatus includes a manual transmission, a friction clutch, and control means.

The manual transmission is a transmission which does not include a torque converter and whose gear position is selected in accordance with the shift position of a shift operation member operated by a driver. The manual transmission includes an input shaft for receiving power from the output shaft of the internal combustion engine, and an output shaft for outputting power to drive wheels of the vehicle. The manual transmission has at least one "motor travel gear position" and at least one "engine travel gear position." When the shift operation member is moved to a shift position corresponding to the motor travel gear position, the motor travel gear position is selected and realized. When the shift operation member is moved to a shift position corresponding to the engine travel gear position, the engine travel gear position is selected and realized. Notably, in the "engine travel gear position," a power transmission system may be established "between the output shaft of the electric motor and the output shaft of the transmission," as well as "between the input shaft of the transmission and the output shaft of the transmission." Thus, when necessary, motor drive torque can make up for insufficiency of engine drive torque.

In this case, the "speed reduction ratio of the output shaft of the transmission to the output shaft of the electric motor" in the at least one motor travel gear position may be designed to be greater than the "speed reduction ratio of the output shaft of the transmission to the input shaft of the transmission" in one engine travel gear position (in the case where only one engine travel gear position is provided) or greater than the maximum speed reduction ratio among those in a plurality of engine travel gear positions (in the case where a plurality of engine travel gear positions are provided). By virtue of this design, the motor travel gear position can serve as a low-speed-side gear position, and can be used as, for example, a gear position for "starting the vehicle through EV travel."

The friction clutch is a clutch which is interposed between the output shaft of the internal combustion engine and the input shaft of the manual transmission and whose engagement state changes in accordance with the operation quantity of a clutch operation member operated by a driver. The control means controls engine drive torque, which is drive torque output from the output shaft of the internal combustion engine, and motor drive torque, which is drive torque output from the output shaft of the electric motor.

This power transmission control apparatus includes first detection means for detecting the operation quantity of the clutch operation member; second detection means for detecting driver's operation of an acceleration operation member for accelerating the vehicle; third detection means for detecting the selected gear position; and fourth detection means for detecting speed of the vehicle.

The control means is configured such that, upon detection that the motor travel gear position has been selected, the control means maintains the internal combustion engine in a stop state, and, upon detection that the engine travel gear position has been selected, the control means operates the internal combustion engine and adjusts the engine drive torque on the basis of the operation quantity of the acceleration operation member. In the case where a power transmission system is established between the output shaft of the electric motor and the output shaft of the transmission in the "engine travel gear position," the motor drive torque may be adjusted on the basis of the operation quantity of the acceleration operation member and the operation quantity of the clutch operation member. By virtue of this control, when necessary, the motor drive torque can make up for insufficiency of the engine drive torque.

The feature of this power transmission control apparatus resides in that the control means is configured as follows. That is, in the case where selection of the motor travel gear position is detected and operation of the acceleration operation member is not detected, the control means determines a target vehicle speed (within a range of very small vehicle speed) on the basis of a previously determined relation between the operation quantity of the clutch operation member and the target vehicle speed, and the detected operation quantity of the clutch operation member. Then, the control means performs vehicle speed control for adjusting the motor drive torque such that the detected speed of the vehicle coincides with the target vehicle speed. In this case, the target vehicle speed may be determined such that the greater the amount of operation in a return direction of the clutch operation member from a predetermined operated position (return operation quantity), the greater the target vehicle speed.

By virtue of the above-described configuration, in the case where the motor travel gear position for starting is selected (in a state in which the clutch operation member has been operated) and the acceleration operation member is not operated, vehicle speed control is executed thereafter. The vehicle speed control enables the driver to adjust the very small vehicle speed by adjusting the operation quantity (specifically, the above-described return operation quantity) of the clutch operation member without operating the acceleration operation member. That is, travel at very low speed, which is similar to so-called creeping, can be realized.

In the case where operation of the acceleration operation member is detected in a period during which the vehicle speed control is being executed, the vehicle speed control may be ended. In the case where the vehicle speed control is ended, thereafter, the motor drive torque may be adjusted to an ordinary torque value determined on the basis of the operation quantity of the acceleration operation member and the operation quantity of the clutch operation member. That is, when the acceleration operation member is operated, the control of the motor drive torque may be smoothly switched from the vehicle speed control to "control for ordinary starting through EV travel."

In the above-described power transmission control apparatus of the present invention, the control means may be configured to determine the target vehicle speed such that the greater the operation quantity of a deceleration operation member, the smaller the target vehicle speed. By virtue of this configuration, during the vehicle speed control, the very small vehicle speed can be adjusted in accordance with not only the operation quantity (return operation quantity) of the clutch operation member but also the operation quantity of the deceleration operation member. Accordingly, the very small vehicle speed during the vehicle speed control can be finely adjusted to match the driver's intention.

### BRIEF DESCRIPTION OF THE DRAWINGS

[FIG. 1] Schematic diagram of a vehicle which includes a "power transmission control apparatus for an HV-MT vehicle which can perform EV travel" according to an embodiment of the present invention.
[FIG. 2] Flowchart showing the flow of processing performed by the apparatus shown in FIG. 1 so as to control MG torque.
[FIG. 3] Graph showing a map which is used in creep vehicle speed control shown in FIG. 2 and which defines the relation between clutch return stroke and creep vehicle speed.
[FIG. 4] Flowchart which relates to a modification of the embodiment of the present invention and which corresponds to FIG. 2.
[FIG. 5] Graph which relates to the modification of the embodiment of the present invention and which corresponds to FIG. 3.
[FIG. 6] Schematic diagram of a vehicle which includes a "power transmission control apparatus for an HV-MT vehicle which can perform EV travel" according to another modification of the embodiment of the present invention.

### MODE FOR CARRYING OUT THE INVENTION

An embodiment of a power transmission control apparatus for a vehicle according to the present invention will now be described with reference to the drawings.

### (Configuration)

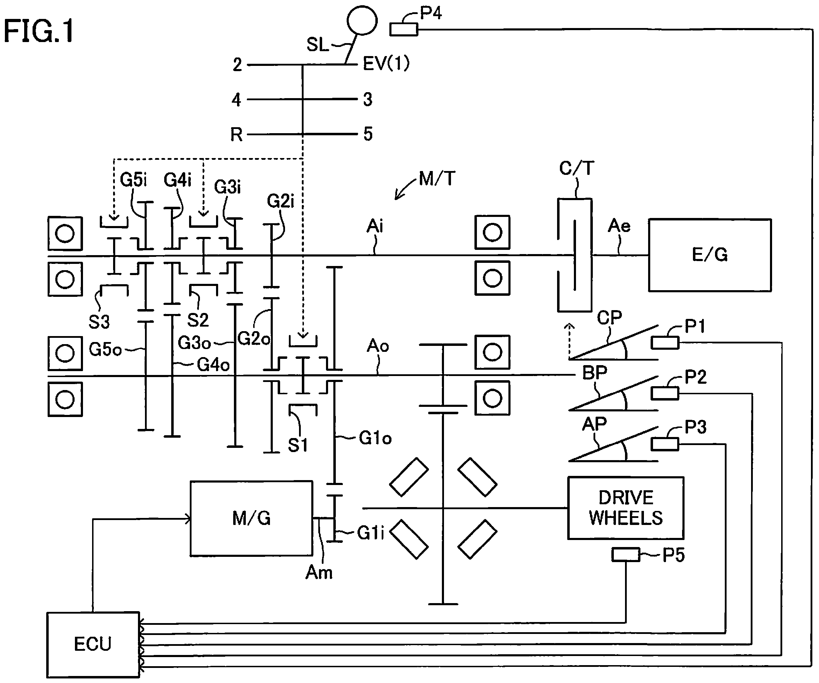

FIG. 1 schematically shows the configuration of a vehicle which includes a power transmission control apparatus according to the embodiment of the present invention (hereinafter referred to as the "present apparatus"). This vehicle is a hybrid vehicle which includes an internal combustion engine and a motor generator as power sources, and the present apparatus includes a manual transmission, which does not include a torque converter, and a friction clutch. That is, the present apparatus is the above-described "power transmission control apparatus for an HV-MT vehicle."

This vehicle includes an engine E/G, a manual transmission M/T, a friction clutch C/T, and a motor generator M/G. The engine E/G is a well known internal combustion engine, such as a gasoline engine which uses gasoline as fuel, or a diesel engine which uses light oil as fuel.

The manual transmission M/T is a transmission which does not include a torque converter and whose gear position is selected in accordance with the shift position of a shift lever SL operated by a driver. The manual transmission M/T has an input shaft Ai for receiving power from an output shaft Ae of the engine E/G, and an output shaft Ao for outputting power to drive wheels of the vehicle.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of a friction plate, which rotates together with the input shaft Ai, in relation to a fry-wheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the operation quantity of the clutch pedal CP detected by a sensor (a sensor P1 to be described later) (by a so-called by-wire scheme).

The motor generator M/G has a well known structure (e.g., an AC synchronous motor), and its rotor (not illustrated) rotates together with its output shaft Am. In the following description, drive torque from the output shaft Ae of the engine E/G will be referred to as "EG torque," and drive torque from the output shaft Am of the motor generator M/G as "MG torque."

As can be understood from the shift pattern of the shift lever SL shown in FIG. 1, in the present example, five forward gear positions (a 1-st gear to a 5-th gear) and a single reverse gear position (R) are provided as selectable gear position. In the following description, description regarding the reverse gear position (R) is not provided.

When the shift lever SL is shifted to a "1-st gear" position, a sleeve S1 moves from a neutral position shown in FIG. 1 to the right side (a 1-st gear position), whereby an idle gear G1o is fixed to an output shaft Ao such that the idle gear G1o cannot rotate in relation to the output shaft Ao. As a result, a power transmission system having a speed reduction ratio for the "1-st gear" is established between the output shaft Am of the motor generator M/G and the output shaft Ao of the manual transmission M/T via a gear G1i and the gear G1o. Meanwhile, no power transmission system is established between the input shaft Ai of the manual transmission M/T and the output shaft Ao of the manual transmission M/T. That is, when the "1-st gear" is selected, there is realized a state in which the vehicle travels by use of only MG torque, while maintaining the engine E/G in a stop state (a state in which the output shaft Ae of the engine E/G stops its rotation) (hereinafter referred to as "EV travel"). That is, this vehicle enables the driver to start the vehicle through EV travel by selecting the "1-st gear." In the following description, a gear position, such as the "1-st gear" in the present example, in which EV travel is realized will be referred to as the "EV travel gear position."

When the shift lever SL is shifted to a "2-nd gear" position, the sleeve S1 moves from the neutral position shown in FIG. 1 to the left side (a 2-nd gear position), whereby an idle gear G2o is fixed to the output shaft Ao such that the idle gear G2o cannot rotate in relation to the output shaft Ao. As a result, a power transmission system having a speed reduction ratio for the "2-nd gear" is established between the input shaft Ai of the manual transmission M/T (that is, the output shaft Ae of the engine E/G) and the output shaft Ao of the manual transmission M/T via a gear G2i and the gear G2o. Meanwhile, no power transmission system is established between the output shaft Am of the motor generator M/G and the output shaft Ao of the manual transmission M/T. That is, when the "2-nd gear" is selected, there is realized a state in which the vehicle travels by use of only EG torque transmitted via the clutch C/T (hereinafter referred to as "EG travel"). In the following description, a gear position, such as the "2-nd gear" in the present example, in which EG travel is realized will be referred to as the "EG travel gear position."

When the shift lever SL is shifted to a "3-rd gear (4-th gear)" position, a sleeve S2 moves from the neutral position shown in FIG. 1 to the right side (left side) (a 3-rd gear (4-th gear) position), whereby an idle gear G3i (G4i) is fixed to the input shaft Ai such that the idle gear G3i (G4i) cannot rotate in relation to the input shaft Ai. As a result, a power transmission system having a speed reduction ratio for the "3-nd gear (4-th gear)" is established between the input shaft Ai of the manual transmission M/T (that is, the output shaft Ae of the engine E/G) and the output shaft Ao of the manual transmission M/T via the gear G3i (G4i) and a gear G3o (G4o). Meanwhile, no power transmission system is established between the output shaft Am of the motor generator M/G and the output shaft Ao of the manual transmission M/T. That is, the "3-rd gear (4-th gear)" is also the "EG travel gear position."

When the shift lever SL is shifted to a "5-th gear" position, a sleeve S3 moves from the neutral position shown in FIG. 1 to the right side (a 5-th gear position), whereby an idle gear G5i is fixed to the input shaft Ai such that the idle gear G5i cannot rotate in relation to the input shaft Ai. As a result, a power transmission system having a speed reduction ratio for the "5-th gear" is established between the input shaft Ai of the manual transmission M/T (that is, the output shaft Ae of the engine E/G) and the output shaft Ao of the manual transmission M/T via the gear G5i and a gear G5o. Meanwhile, no power transmission system is established between the output shaft Am of the motor generator M/G and the output shaft Ao of the manual transmission M/T. That is, the "5-rd gear" is also the "EG travel gear position."

As described above, in the present example, only the "1-st gear" is the EV travel gear position, and each of the "2-nd gear" to the "5-th gear" is the EG travel gear position. The speed reduction ratios (the speed reduction ratio of the output shaft Ao to the input shaft Ai; that is, the ratio of the rotational speed of the input shaft Ai to that of the output shaft Ao) of the "2-nd gear" to the "5-th gear" are determined such that the speed reduction ratio of the "2-nd gear" is the largest, and that of the "5-th gear" is the smallest. The speed reduction ratio of the "1-st gear" (the speed reduction ratio of the output shaft Ao to the output shaft Am; that is, the ratio of the rotational speed of the output shaft Am to that of the output shaft Ao) is greater than the speed reduction ratio of the "2-nd gear." In the present example, when any one of the "2-nd gear" to the "5-th gear," which are EG travel gear positions, is selected, since no power transmission system is established between the output shaft Am and the output shaft Ao, it is impossible to make up for insufficiency of EG torque by use of MG torque.

The positions of the sleeves S1 to S3 may be mechanically adjusted in accordance with the shift position of the shift lever SL through use of a link mechanism or the like which mechanically connects the shift lever SL to the sleeves S1 to S3. Alternatively, the positions of the sleeves S1 to S3 may be electrically adjusted by making use of drive forces of actuators which operate in accordance with the shift position of the shift lever SL detected by a sensor (a sensor P4 to be described later) (by a so-called by-wire scheme).

The present apparatus includes the clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, the shift position sensor P4 which detects the position of the shift lever SL, and a wheel speed sensor P5 which detects wheel speeds of the vehicle.

Moreover, the present apparatus includes an electronic control unit (hereinafter simply referred to as the "ECU"). On the basis of information, among others, from the above-mentioned sensors P1 to P5 and other sensors, etc., the ECU controls the EG torque by controlling the fuel injection amount of the engine E/G (opening of its throttle valve) and controls the MG torque by controlling an inverter (not shown).

### (Control of the engine E/G)

The control of the engine E/G by the present apparatus is generally performed as follows. When the vehicle is stopped, the engine E/G is maintained in a stop state (a state in which fuel injection is not performed). In the case where the shift lever SL is shifted from the neutral position to one EG travel gear position (any of the "2-nd gear" to "the 5-th gear") (that is, one EG travel gear position is selected) when the engine E/G is in the stop state, the engine E/G is started (fuel injection is started). In periods during which the engine E/G is operating (fuel injection is being performed), the EG torque is controlled on the basis of the accelerator opening, etc. In the description below, this control will be referred to as "ordinary control of the engine E/G." Travel in the EG travel gear position is performed through the ordinary control of the engine E/G. When the shift lever SL is shifted from the neutral position to the EV travel gear position (the "1-st gear") (that is, the EV travel gear position is selected) in a period during which the engine E/G is operating or when the vehicle is stopped, the engine E/G is again maintained in the stop state.

### (Control of the motor generator M/G)

The control of the motor generator M/G by the present apparatus is generally performed as follows. When the vehicle is stopped, the motor generator M/G is maintained in a stop state (the MG torque = 0). In the case where the shift lever SL is shifted from the neutral position to the EV travel gear position (the "1-st gear") (that is, the EV travel gear position is selected) when the motor generator M/G is in the stopped state, "creep vehicle speed control" that utilizes the MG torque or "normal start control" which utilizes the MG torque is started. The "creep vehicle speed control" and the "normal start control" will be described later.

When the shift lever SL is shifted from the neutral position to one EG travel gear position (any of the "2-nd gear" to "the 5-th gear") (that is, one EG travel gear position is selected) after the vehicle has been started in the EV travel gear position (the "1-st gear") by making use of the "creep vehicle speed control" or the "normal start control" or when the vehicle is stopped, the motor generator M/G is again maintained in the stop state.

### (Creep vehicle speed control and normal start control)

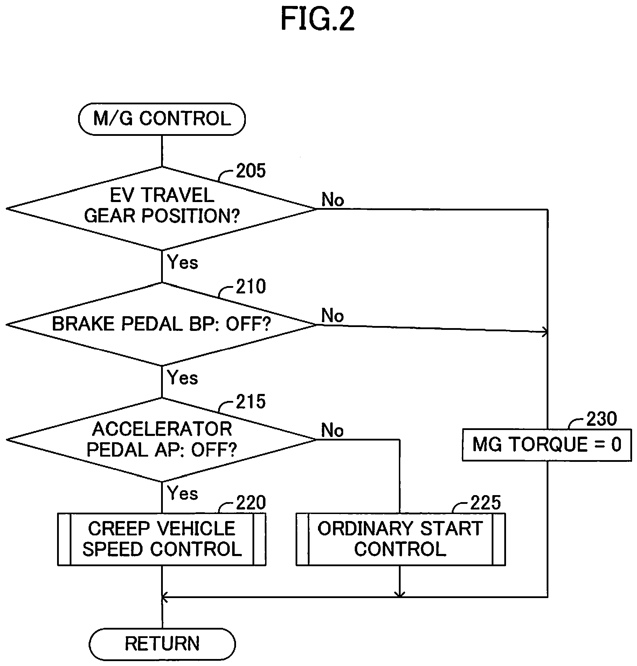

Control of the MG torque, including the "creep vehicle speed control" and the "normal start control," will be described with reference to a flowchart shown in FIG. 2. The processing for the control will be descried on the assumption that an ignition switch (not shown) is in an ON state. First, in step 205, the ECU determines whether or not the shift lever SL has been shifted from the neutral position to the EV travel gear position (the "1-st gear"). When the ECU makes a "No" determination, the ECU maintains the MG torque at "0" in step 230.

Now, there will be described the case where the ECU makes a "Yes" determination in step 205; that is, the case where the EV travel gear position (the "1-st gear") has been selected. Notably, this flowchart will be described on the assumption that the clutch pedal CP is first depressed when the vehicle is in the stop state, and the shift lever SL is then shifted from the neutral position to the EV travel gear position (the "1-st gear").

When the EV travel gear position (the "1-st gear") is selected (in a state in which the clutch pedal CP is depressed), in step 210, the ECU determines whether or not the brake pedal BP is operated. When the brake pedal BP is in a depressed state (the ECU makes a "No" determination in step 210), the ECU maintains the MG torque at "0" in step 230. Determination as to whether or not the brake pedal BP is operated may be made by determining whether or not the operation quantity (depression force, brake hydraulic pressure, etc.) of the brake pedal BP is equal to or greater than a predetermined value.

Meanwhile, in the case where the ECU makes a "Yes" determination in step 210, in step 215, the ECU determines whether or not the accelerator pedal AP is operated. Determination as to whether or not the accelerator pedal AP is operated may be made by determining whether or not the accelerator opening is equal to or greater than a predetermined value.

First, there will be described a case where the ECU makes a "Yes" determination in S215; that is, the EV travel gear position (the "1-st gear") is selected (in a state in which the clutch pedal CP is depressed), the brake pedal BP is not operated, and the accelerator pedal AP is not operated. In this case, the ECU executes the "creep vehicle speed control" in step 220.

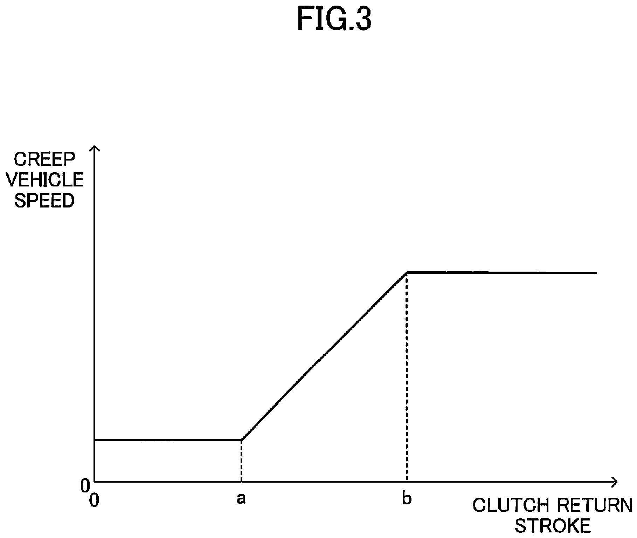

In this "creep vehicle speed control, the ECU uses a map which is shown in FIG. 3 and which defines the relation between "clutch return stroke" and "creep vehicle speed" (a very small vehicle speed serving as a target). The "clutch return stroke" refers to the operation quantity (stroke) in the return direction of the clutch pedal CP from a predetermined, maximally depressed position (the maximum stroke).

As shown in FIG. 3, in the present example, the creep vehicle speed (target vehicle speed) is constant when the clutch return stroke falls within a range of "0" to a stroke a, increases with the clutch return stroke when the clutch return stroke falls within a range of the stroke a to a stroke b, and becomes constant when the clutch return stroke exceeds the stroke b. For example, the stroke a corresponds to a "stroke at which the clutch C/T moves from a completely disengaged state to a half-engaged state," and the stroke b corresponds to a "stroke at which the clutch C/T moves from the half-engaged state to a completely engaged state."

In the "creep vehicle speed control," the ECU calculates a target creep vehicle speed on the basis of the above-described map and the current clutch return stroke obtained from the clutch operation quantity sensor P1. Then, the ECU controls the MG torque through feedback control such that the actual vehicle speed detected on the basis of information from the wheel speed sensor S5, etc. coincides with the calculated creep vehicle speed.

The "creep vehicle speed control" enables a driver to adjust the very small vehicle speed by adjusting the operation quantity of the clutch pedal CP (clutch return stroke) without operating the accelerator pedal AP. That is, travel at very low speed, similar to so-called creeping, can be realized.

When the accelerator pedal AP is operated in a period during which the "creep vehicle speed control" is being executed as described above, the ECU makes a "No" determination in step 215, and executes the "normal start control" in step 225, in stead of the "creep vehicle speed control." In the "normal start control," the ECU controls the MG torque on the basis of the accelerator opening and the clutch stroke (clutch return stroke).

Specifically, the MG torque in the "normal start control" is controlled by making use of a map or the like which is previously created for an "ordinary vehicle which includes a manual transmission and a friction clutch and which includes an internal combustion engine only as a power source, the map defining the relation between "accelerator opening and clutch stroke" and "torque of the internal combustion engine transmitted to the input shaft of the manual transmission via the clutch" for the cases where the vehicle starts in the "1-st gear." Notably, when the brake pedal BP is operated during execution of the "creep vehicle speed control" or the "normal start control," the ECU stops the currently executed control (makes a "No" determination in step 210).

### (Action and effects)

As described above, in the present apparatus, in the case where the motor travel gear position for starting (the "1-st gear") is selected in a state in which the clutch pedal CP has been depressed after stoppage of the vehicle, and the accelerator pedal AP is not operated, the "creep vehicle speed control" using the MG torque is executed thereafter. As a result, a driver can adjust the very small vehicle speed by adjusting the clutch return stroke without operating the accelerator pedal AP. That is, travel at very low speed, similar to so-called creeping, can be realized.

In addition, in the case where operation of the accelerator pedal AP is detected in a period during which the "creep vehicle speed control" is being executed, the control of the motor generator M/G is smoothly switched from the "creep vehicle speed control" to the "control for ordinary starting through EV travel," which uses the MG torque. Accordingly, the driver can start the vehicle by making use of creeping while having a sensation similar to that which the driver has when he or she starts a vehicle including an automatic transmission that uses a torque converter.

The present invention is not limited to the above-described embodiment, and various modifications may be employed without departing from the scope of the present invention. For example, in the above-described embodiment, when one of the "2-nd gear" to the "5-th gear," which are EG travel gear positions, is selected, it is impossible to make up for insufficiency of the EG torque by use of the MG torque, because no power transmission system is established between the output shaft Am of the motor generator M/G and the output shaft Ao of the manual transmission M/T. However, in the case where the power transmission control apparatus employs a structure which can establish a power transmission system between the output shafts Am and Ao in a state in which one of the "2-nd gear" to the "5-th gear," which are EG travel gear positions, is selected, it is impossible to make up for insufficiency of the EG torque by use of the MG torque.

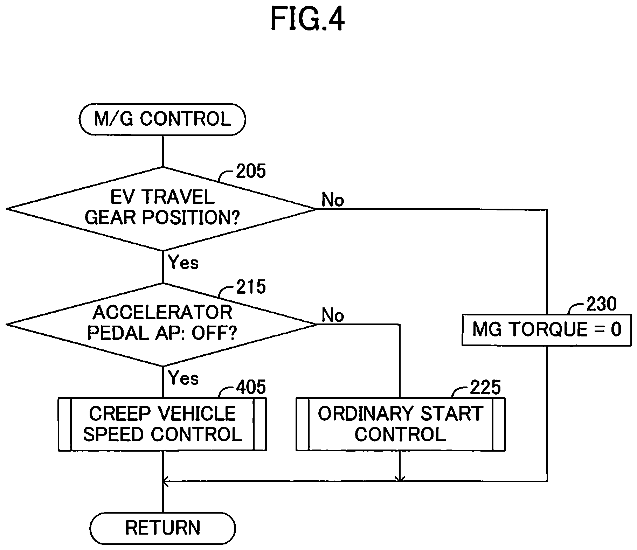

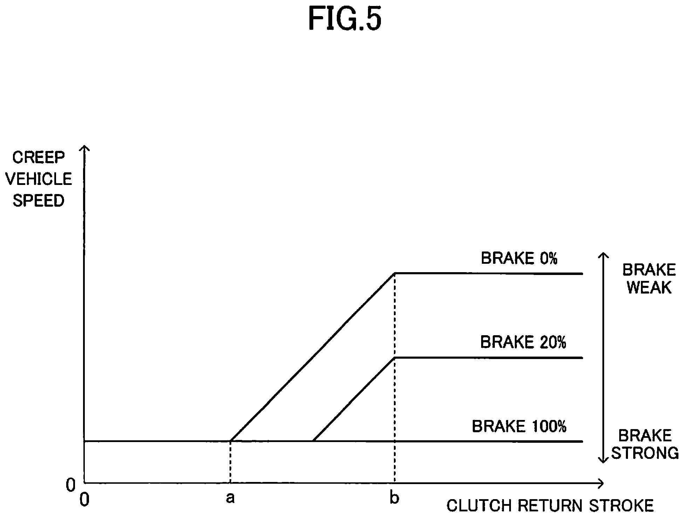

In the above-described embodiment, when the brake pedal BP is operated in a period during which the "creep vehicle speed control" is being executed, the ECU stops the "creep vehicle speed control" (the ECU makes a "No" determination in step 210 of FIG. 2). However, as shown in FIG. 4, the above-mentioned step 210 may be omitted. In this case, in the "creep vehicle speed control" performed in step 405, the ECU may use a map shown in FIG. 5 instead of the map shown in FIG. 3.

Thus, the creep vehicle speed (target vehicle speed) is set such that the greater the operation quantity (depression force, brake hydraulic pressure, etc.) of the brake pedal BP, the lower the creep vehicle speed. As a result, the very small vehicle speed during the "creep vehicle speed control" can be adjusted in accordance with not only the return operation quantity of the clutch but also the operation quantity of the brake pedal BP. Accordingly, the very small vehicle speed during the "creep vehicle speed control" can be finely adjusted to match the driver's intention.

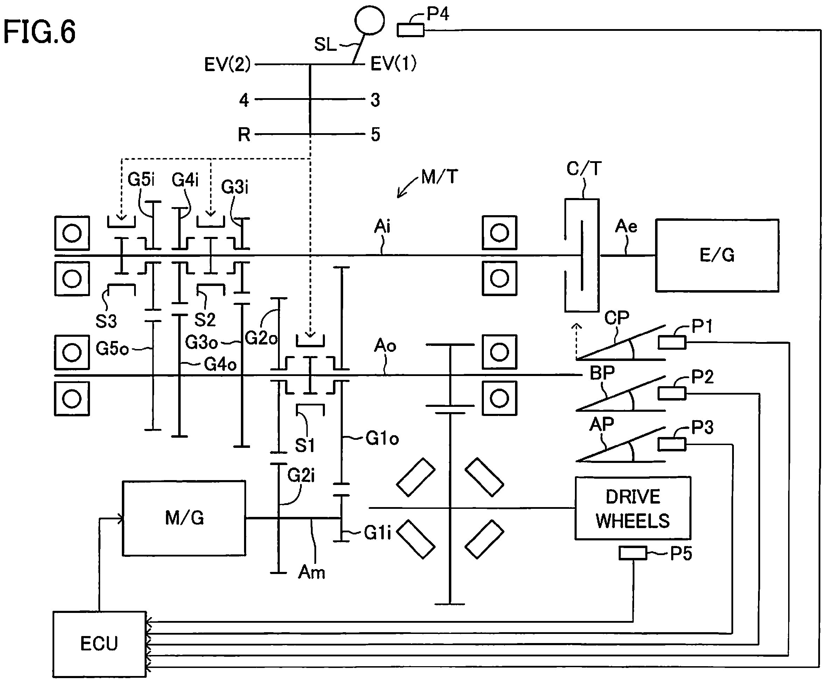

In the above-described embodiment, only the "1-st gear" is the EV travel gear position, and each of the "2-nd gear" to the "5-th gear" is the EG travel gear position. However, as shown in FIG. 6, each of the "1-st gear" and the "2-nd gear" may be the EV travel gear position, and each of the "3-rd gear" to the "5-th gear" may be the EG travel gear position. In the configuration shown in FIG. 6, when the shift lever SL is shifted to the "2-nd gear" position, the sleeve S1 moves from the neutral position shown in FIG. 6 to the left side (the 2-nd gear position), whereby the idle gear G2o is fixed to the output shaft Ao such that the idle gear G2o cannot rotate in relation to the output shaft Ao. As a result, a power transmission system having a speed reduction ratio for the "2-nd gear" is established between the output shaft Am of the motor generator M/G and the output shaft Ao of the manual transmission M/T via the gears G2i and G2o. Meanwhile, no power transmission system is established between the input shaft Ai of the manual transmission M/T and the output shaft Ao of the manual transmission M/T. That is, when the "2-nd gear" is selected, EV travel is realized as in the case where the "1-st gear" is selected. Accordingly, a driver can start the vehicle in the "2-nd gear" by making use of creeping.

## Claims

1. A power transmission control apparatus for a vehicle which includes an internal combustion engine (E/G) and an electric motor (M/G) as power sources, comprising:
a manual transmission (M/T) which does not include a torque converter and whose gear position is selected in accordance with the shift position of a shift operation member (SL) operated by a driver, the manual transmission (M/T) including an input shaft (Ai) for receiving power from an output shaft (Ae) of the internal combustion engine (E/G), and an output shaft (Ao) for outputting power to drive wheels of the vehicle, and the manual transmission (M/T) having at least one motor travel gear position, in which no power transmission system is established between the input shaft (Ai) of the transmission (M/T) and the output shaft (Ao) of the transmission (M/T) and a power transmission system is established between an output shaft (Am) of the electric motor (M/G) and the output shaft (Ao) of the transmission (M/T), and at least one engine travel gear position, in which a power transmission system is established between the input shaft (Ai) of the transmission (M/T) and the output shaft (Ao) of the transmission (M/T), wherein the motor travel gear position is selected and realized as a result of the shift operation member (SL) being moved to a shift position corresponding to the motor travel gear position, and the engine travel gear position is selected and realized as a result of the shift operation member (SL) being moved to a shift position corresponding to the engine travel gear position;
a friction clutch (C/T) which is interposed between the output shaft (Ae) of the internal combustion engine (E/G) and the input shaft (Ai) of the manual transmission (M/T) and whose engagement state changes in accordance with an operation quantity of a clutch operation member (CP) operated by a driver;
control means (ECU) for controlling engine drive torque, which is drive torque output from the output shaft (Ae) of the internal combustion engine(E/G), and motor drive torque (Am), which is drive torque output from the output shaft (Am) of the electric motor (M/G);
first detection means (P1) for detecting the operation quantity of the clutch operation member (CP);
second detection means (P3) for detecting driver's operation of an acceleration operation member (AP) for accelerating the vehicle;
third detection means (P4) for detecting the selected gear position; and
fourth detection means (P5) for detecting speed of the vehicle, wherein the control means (ECU) is configured such that, upon detection that the motor travel gear position has been selected, the control means (ECU) maintains the internal combustion engine (E/G) in a stop state, and, upon detection that the engine travel gear position has been selected, the control means (ECU) operates the internal combustion engine (E/G) and adjusts the engine drive torque on the basis of the operation quantity of the acceleration operation member (AP); and
the control means (ECU) is configured such that, when the control means (ECU) detects that the motor travel gear position has been selected and does not detect operation of the acceleration operation member (AP), the control means (ECU) determines a target vehicle speed on the basis of a previously determined relation between the operation quantity of the clutch operation member (CP) and the target vehicle speed, and the detected operation quantity of the clutch operation member (CP), and performs vehicle speed control for adjusting the motor drive torque such that the detected speed of the vehicle coincides with the target vehicle speed.

2. A power transmission control apparatus for a vehicle according to claim 1, wherein, when the control means (ECU) detects operation of the acceleration operation member (AP) in a period during which the vehicle speed control is being executed, the control means (ECU) ends the vehicle speed control, and adjusts the motor drive torque to an ordinary torque value determined on the basis of the operation quantity of the acceleration operation member (AP) and the operation quantity of the clutch operation member (CP).

3. A power transmission control apparatus for a vehicle according to claim 1 or 2, wherein the control means (ECU) is configured to determine the target vehicle speed such that the greater the return operation quantity, which is the amount of operation in a return direction of the clutch operation member (CP) from a predetermined operated position, the greater the target vehicle speed.

4. A power transmission control apparatus for a vehicle according to any one of claims 1 to 3, further comprising fifth detection means (P2) for detecting an operation quantity of a deceleration operation member (BP) operated by the driver so as to decelerate the vehicle, wherein the control means (ECU) is configured to determine the target vehicle speed such that the greater the operation quantity of the deceleration operation member (BP), the smaller the target vehicle speed.

5. A power transmission control apparatus for a vehicle according to any one of claims 1 to 4, wherein the speed reduction ratio of the output shaft (Ao) of the transmission (M/T) to the output shaft (Am) of the electric motor in the at least one motor travel gear position is greater than the speed reduction ratio of the output shaft (Ao) of the transmission (M/T) to the input shaft (Ai) of the transmission in the at least one engine travel gear position, or greater than the maximum speed reduction ratio among those in a plurality of engine travel gear positions if provided.

## Patentansprüche

1. Leistungsübertragungssteuerungsvorrichtung für ein Fahrzeug, das einen Verbrennungsmotor (E/G) und einen Elektromotor (M/G) als Leistungsquellen beinhaltet, aufweisend:
ein Handschaltgetriebe (M/T), das keinen Drehmomentwandler enthält und dessen Gangposition gemäß der Schaltposition eines Schaltbetätigungselements (SL) ausgewählt wird, das von einem Fahrer betätigt wird, wobei das Handschaltgetriebe (M/T) eine Eingangswelle (Ai) zum Aufnehmen von Leistung von einer Ausgangswelle (Ae) des Verbrennungsmotors (E/G), und eine Ausgangswelle (Ao) zum Ausgeben von Leistung an Antriebsräder des Fahrzeugs aufweist, und wobei das Handschaltgetriebe (M/T) mindestens eine Elektromotor-Fahr-Gangposition, in der zwischen der Eingangswelle (Ai) des Getriebes (M/T) und der Ausgangswelle (Ao) des Getriebes (M/T) kein Leistungsübertragungssystem hergestellt ist und zwischen einer Ausgangswelle (Am) des Elektromotors (M/G) und der Ausgangswelle (Ao) des Getriebes (M/T) ein Leistungsübertragungssystem hergestellt ist, und mindestens eine Verbrennungsmotor-Fahr-Gangposition hat, in der zwischen der Eingangswelle (Ai) des Getriebes (M/T) und der Ausgangswelle (Ao) des Getriebes (M/T) ein Leistungsübertragungssystem hergestellt ist, wobei die Elektromotor-Fahr-Gangposition als ein Ergebnis dessen ausgewählt und umgesetzt wird, dass das Schaltbetätigungselement (SL) in eine Schaltposition bewegt wird, die der Elektromotor-Fahr-Gangposition entspricht, und die Verbrennungsmotor-Fahr-Gangposition als Ergebnis dessen ausgewählt und umgesetzt wird, dass das Schaltbetätigungselement (SL) in eine Schaltposition bewegt wird, die der Verbrennungsmotor-Fahr-Gangposition entspricht;
eine Reibungskupplung (C/T), die zwischen der Ausgangswelle (Ae) des Verbrennungsmotors (E/G) und der Eingangswelle (Ai) des Handschaltgetriebes (M/T) angeordnet ist und dessen Eingriffszustand sich gemäß einem Betätigungsgrad eines Kupplungsbetätigungselements (CP) ändert, das von einem Fahrer betätigt wird;
ein Steuerungsmittel (ECU) zum Steuern eines Verbrennungsmotor-Antriebs-Drehmoments, das ein Antriebsdrehmoment ist, das von der Ausgangswelle (Ae) des Verbrennungsmotors (E/G) ausgegeben wird, und ein Elektromotor-Antriebs-Drehmoment (Am), das ein Antriebsdrehmoment ist, das von der Ausgangswelle (Am) des Elektromotors (M/G) ausgegeben wird;
ein erstes Erfassungsmittel (P1) zum Erfassen des Betätigungsgrads des Kupplungsbetätigungselements (CP);
ein zweites Erfassungsmittel (P3) zum Erfassen einer durch den Fahrer erfolgten Betätigung eines Beschleunigungs-Betätigungselements (AP) zum Beschleunigen des Fahrzeugs;
ein drittes Erfassungsmittel (P4) zum Erfassen der ausgewählten Gangposition; und
ein viertes Erfassungsmittel (P5) zum Erfassen einer Geschwindigkeit des Fahrzeugs, wobei das Steuerungsmittel (ECU) so konfiguriert ist, dass bei einem Erfassen, dass die Elektromotor-Fahr-Gangposition ausgewählt wurde, das Steuerungsmittel (ECU) den Verbrennungsmotor (E/G) in einem Stopp-Zustand behält, und bei einer Erfassung, dass die Verbrennungsmotor-Fahr-Gangposition ausgewählt wurde, das Steuerungsmittel (ECU) den Verbrennungsmotor (E/G) betreibt und das Verbrennungsmotor-Antriebs-Drehmoment auf Basis des Betätigungsgrads des Beschleunigungs-Betätigungselements (AP) einstellt; und
das Steuerungsmittel (ECU) so konfiguriert ist, dass, wenn das Steuerungsmittel (ECU) erfasst, dass die Elektromotor-Fahr-Gangposition ausgewählt wurde, und keine Betätigung des Beschleunigungs-Betätigungselements (AP) erfasst, das Steuerungsmittel (ECU) eine Ziel-Fahrzeuggeschwindigkeit auf Basis einer zuvor bestimmten Beziehung zwischen dem Betätigungsgrad des Kupplungsbetätigungselements (CP) und der Ziel-Fahrzeuggeschwindigkeit und des erfassten Betätigungsgrads des Kupplungsbetätigungselements (CP) bestimmt und eine Fahrzeuggeschwindigkeitssteuerung zum Einstellen des Elektromotor-Antriebs-Drehmoments so durchführt, dass die erfasste Geschwindigkeit des Fahrzeugs mit der Ziel-Fahrzeuggeschwindigkeit übereinstimmt.

2. Leistungsübertragungssteuerungsvorrichtung für ein Fahrzeug gemäß Anspruch 1, wobei, wenn das Steuerungsmittel (ECU) eine Betätigung des Beschleunigungs-Betätigungselements (AP) in einem Zeitraum erfasst, während dessen die Fahrzeuggeschwindigkeitssteuerung ausgeführt wird, das Steuerungsmittel (ECU) die Fahrzeuggeschwindigkeitssteuerung beendet und das Elektromotor-Antriebs-Drehmoment auf einen gewöhnlichen Drehmomentwert einstellt, der auf Basis des Betätigungsgrads des Beschleunigungs-Betätigungselements (AP) und des Betätigungsgrads des Kupplungsbetätigungselements (CP) bestimmt wird.

3. Leistungsübertragungssteuerungsvorrichtung für ein Fahrzeug gemäß Anspruch 1 oder 2, wobei das Steuerungsmittel (ECU) dazu konfiguriert ist, die Ziel-Fahrzeuggeschwindigkeit so zu bestimmen, dass je größer der Rück-Betätigungsgrad ist, welcher der Betätigungsgrad des Kupplungsbetätigungselements (CP) von einer vorbestimmten betätigten Position in einer Rückrichtung ist, desto größer die Ziel-Fahrzeuggeschwindigkeit ist.

4. Leistungsübertragungssteuerungsvorrichtung für ein Fahrzeug gemäß einem der Ansprüche 1 bis 3, ferner aufweisend ein fünftes Erfassungsmittel (P2) zum Erfassen eines Betätigungsgrads eines Verzögerungs-Betätigungselements (BP), das von dem Fahrer betätigt wird, um so das Fahrzeug zu verzögern, wobei das Steuerungsmittel (ECU) dazu konfiguriert ist, die Ziel-Fahrzeuggeschwindigkeit so zu bestimmen, dass je größer der Betätigungsgrad des Verzögerungs-Betätigungselements (BP) ist, desto kleiner die Ziel-Fahrzeuggeschwindigkeit ist.

5. Leistungsübertragungssteuerungsvorrichtung für ein Fahrzeug gemäß einem der Ansprüche 1 bis 4, wobei das Untersetzungsverhältnis der Ausgangswelle (Ao) des Getriebes (M/T) zur Ausgangswelle (Am) des Elektromotors in der mindestens einen Elektromotor-Fahr-Gangposition größer als das Untersetzungsverhältnis der Ausgangswelle (Ao) des Getriebes (M/T) zur Eingangswelle (Ai) des Getriebes in der mindestens einen Verbrennungsmotor-Fahr-Gangposition oder größer als das maximale Untersetzungsverhältnis unter den gegebenenfalls mehreren Verbrennungsmotor-Fahr-Gangpositionen ist.

## Revendications

1. Appareil de commande de transmission de puissance pour un véhicule comprenant un moteur à combustion interne (E/G) et un moteur électrique (M/G) en tant que sources de puissance, comprenant :
une transmission manuelle (M/T) n'incluant pas un convertisseur de couple et dont une position de rapport est sélectionnée en fonction de la position de changement de vitesse d'un organe d'actionnement de changement de vitesse (SL) actionné par un conducteur, la transmission manuelle (M/T) comprenant un arbre d'entrée (Ai) pour recevoir une puissance d'un arbre de sortie (Ae) du moteur à combustion interne (E/G), et un arbre de sortie (Ao) pour délivrer une puissance pour entraîner des roues du véhicule, et la transmission manuelle (M/T) ayant au moins une position de rapport de déplacement de moteur électrique à laquelle aucun système de transmission de puissance n'est établi entre l'arbre d'entrée (Ai) de la transmission (M/T) et l'arbre de sortie (Ao) de la transmission (M/T) et un système de transmission de puissance est établi entre un arbre de sortie (Am) du moteur électrique (M/G) et l'arbre de sortie (Ao) de la transmission (M/T), et au moins une position de rapport de déplacement de moteur à laquelle un système de transmission de puissance est établi entre l'arbre d'entrée (Ai) de la transmission (M/T) et l'arbre de sortie (Ao) de la transmission (M/T), dans lequel la position de rapport de déplacement de moteur électrique est sélectionnée et réalisée en conséquence du passage de l'organe d'actionnement de changement de vitesse (SL) à une position de changement de vitesse correspondant à la position de rapport de déplacement de moteur électrique, et la position de rapport de déplacement de moteur est sélectionnée et réalisée en conséquence du passage de l'organe d'actionnement de changement de vitesse (SL) à une position de changement de vitesse correspondant à la position de rapport de déplacement de moteur ;
un embrayage à frottement (C/T) qui est interposé entre l'arbre de sortie (Ae) du moteur à combustion interne (E/G) et l'arbre d'entrée (Ai) de la transmission manuelle (M/T) et dont l'état de mise en prise change en fonction d'une quantité d'actionnement d'un organe d'actionnement d'embrayage (CP) actionné par un conducteur ;
des moyens de commande (ECU) pour commander un couple d'entraînement de moteur, qui est une sortie de couple d'entraînement de l'arbre de sortie (Ae) du moteur à combustion interne (E/G), et un couple d'entraînement de moteur électrique (Am), qui est une sortie de couple d'entraînement de l'arbre de sortie (Am) du moteur électrique (M/G) ;
des premiers moyens de détection (P1) pour détecter la quantité d'actionnement de l'organe d'actionnement d'embrayage (CP) ;
des deuxièmes moyens de détection (P3) pour détecter un actionnement par le conducteur d'un organe d'actionnement d'accélération (AP) pour accélérer le véhicule ;
des troisièmes moyens de détection (P4) pour détecter la position de rapport sélectionnée ; et
des quatrièmes moyens de détection (P5) pour détecter une vitesse du véhicule, dans lequel
les moyens de commande (ECU) sont configurés de sorte que, à la détection que la position de rapport de déplacement de moteur électrique a été sélectionnée, les moyens de commande (ECU) maintiennent le moteur à combustion interne (E/G) dans un état d'arrêt, et, à la détection que la position de rapport de déplacement de moteur a été sélectionnée, les moyens de commande (ECU) actionnent le moteur à combustion interne (E/G) et ajustent le couple d'entraînement de moteur sur la base de la quantité d'actionnement de l'organe d'actionnement d'accélération (AP) ; et
les moyens de commande (ECU) sont configurés de sorte que, lorsque les moyens de commande (ECU) détectent que la position de rapport de déplacement de moteur électrique a été sélectionnée et ne détectent pas d'actionnement de l'organe d'actionnement d'accélération (AP), les moyens de commande (ECU) déterminent une vitesse de véhicule cible sur la base d'une relation préalablement déterminée entre la quantité d'actionnement de l'organe d'actionnement d'embrayage (CP) et la vitesse de véhicule cible, et la quantité d'actionnement détectée de l'organe d'actionnement d'embrayage (CP), et effectuent une commande de vitesse de véhicule pour ajuster le couple d'entraînement de moteur électrique de sorte que la vitesse détectée du véhicule coïncide avec la vitesse de véhicule cible.

2. Appareil de commande de transmission de puissance pour un véhicule selon la revendication 1, dans lequel, lorsque les moyens de commande (ECU) détectent un actionnement de l'organe d'actionnement d'accélération (AP) dans une période au cours de laquelle la commande de vitesse de véhicule est exécutée, les moyens de commande (ECU) terminent la commande de vitesse de véhicule, et ajustent le couple d'entraînement de moteur électrique à une valeur de couple ordinaire déterminée sur la base de la quantité d'actionnement de l'organe d'actionnement d'accélération (AP) et de la quantité d'actionnement de l'organe d'actionnement d'embrayage (CP).

3. Appareil de commande de transmission de puissance pour un véhicule selon la revendication 1 ou 2, dans lequel les moyens de commande (ECU) sont configurés pour déterminer la vitesse de véhicule cible de sorte que la vitesse de véhicule cible augmente avec l'augmentation de la quantité d'actionnement de retour, qui est la quantité d'actionnement dans un sens de retour de l'organe d'actionnement d'embrayage (CP) depuis une position actionnée prédéterminée.

4. Appareil de commande de transmission de puissance pour un véhicule selon l'une quelconque des revendications 1 à 3, comprenant en outre des cinquièmes moyens de détection (P2) pour détecter une quantité d'actionnement d'un organe d'actionnement de décélération (BP) actionné par le conducteur de manière à décélérer le véhicule, dans lequel les moyens de commande (ECU) sont configurés pour déterminer la vitesse de véhicule cible de sorte que la vitesse de véhicule cible diminue avec l'augmentation de la quantité d'actionnement de l'organe d'actionnement de décélération (BP).

5. Appareil de commande de transmission de puissance pour un véhicule selon l'une quelconque des revendications 1 à 4, dans lequel le taux de réduction de vitesse de l'arbre de sortie (Ao) de la transmission (M/T) à l'arbre de sortie (Am) du moteur électrique à l'au moins une position de rapport de déplacement de moteur électrique soit supérieur au taux de réduction de vitesse de l'arbre de sortie (Ao) de la transmission (M/T) à l'arbre d'entrée (Ai) de la transmission à l'au moins une position de rapport de déplacement de moteur, ou supérieur au taux de réduction de vitesse maximal parmi ceux à une pluralité de positions de rapport de déplacement de moteur s'ils sont fournis.
